(19) Europäisches Patentamt
European Patent Office
Office européen des brevets

(11) EP 0 314 619 B1

(12) EUROPÄISCHE PATENTSCHRIFT

(45) Veröffentlichungstag und Bekanntmachung des Hinweises auf die Patenterteilung:
**10.07.1996 Patentblatt 1996/28**

(51) Int Cl.6: **C08G 59/68**, C08G 59/06

(21) Anmeldenummer: **88810713.3**

(22) Anmeldetag: **19.10.1988**

(54) **Epoxidharzgemische**

Epoxy resin mixture

Mélanges de résine époxyde

(84) Benannte Vertragsstaaten:
**BE CH DE ES FR GB IT LI NL**

(30) Priorität: **29.10.1987 CH 4229/87**
**29.06.1988 CH 2472/88**

(43) Veröffentlichungstag der Anmeldung:
**03.05.1989 Patentblatt 1989/18**

(73) Patentinhaber: **CIBA-GEIGY AG**
**CH-4002 Basel (CH)**

(72) Erfinder:
- **Hofer, Arnold, Dr.**
  **CH-4132 Muttenz (CH)**
- **Gempeler, Hans, Dr.**
  **CH-4147 Aesch (CH)**

(56) Entgegenhaltungen:
**US-A- 3 330 807**
**US-A- 4 165 412**
**US-A- 4 577 033**

- **WPIL, FILE SUPPLIER, Derwent Publictions Ltd, London, GB; AN=83-702618; & JP-A-58 89 617 (DENKI KAGAKU) 28-05-1983**
- **CHEMICAL ABSTRACTS, Band 91, 23. Juli 1979, Seite 64, Zusammenfassung Nr.22010j, Columbus, Ohio, US**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 314 619 B1

## Beschreibung

Die vorliegende Erfindung betrifft Epoxidharzzusammensetzungen welche in Gegenwart von Piperidiniumsalzen vorverlängert werden können, sowie die Verwendung dieser Salze als Vorverlängerungskatalysatoren für Epoxidharze.

Unter Vorverlängerung von Epoxidharzen wird allgemein eine Kettenverlängerung und damit verbunden eine Molekulargewichtserhöhung von Epoxidharzen verstanden. Dabei spielt vor allem die Selektivität des verwendeten Katalysators eine Rolle, welche die Erzeugung linearer Polyhydroxyether sicherstellen soll.

Gleichzeitig mit der Selektivität sollen Vorverlängerungskatalysatoren genügend reaktionsfähig sein, um die Bildung linearer fester vorverlängerter höhermolekularer Epoxidharze mit wirtschaftlich günstiger Geschwindigkeit zu ermöglichen. Hohe Reaktionsgeschwindigkeiten sind dabei wegen der Oeffnung des Epoxidrings von starker Wärmeentwicklung begleitet, und die freigesetzte Wärme kann zur Aufheizung des Reaktionsgemisches verwendet werden.

Viele Verbindungen wurden als Katalysatoren für die Vorverlängerung flüssiger Epoxidharze vorgeschlagen oder beschrieben. Zum Teil sind diese jedoch nicht selektiv und verursachen die obenerwähnte Verzweigung oder Vernetzung. Andere wiederum sind unwirksam in Förderung der stark exothermen Vorverlängerungsreaktionen zur Erzeugung eines befriedigend vorverlängerten linearen festen Epoxidharzes mit praktisch brauchbarer Geschwindigkeit.

Als Vorverlängerungskatalysatoren (advancement catalysts) sind z.B. Tetraalkylammoniumhydroxide oder -halogenide bekannt (s. US 4,465,722).

Ausserdem wurde im US 3,275,708 Piperidin als Vorverlängerungskatalysator vorgeschlagen.

In der JP-A-79 25 999 werden Blends aus Epoxidharzen und Polyalkenylphenolen mit Piperidinacetat als Härtungsbeschleuniger beschrieben.

Die nach bekannten Verfahren hergestellten vorverlängerten Epoxidharze genügen allerdings nicht in allen Punkten den hohen Anforderungen, welche heute an solche Produkte gestellt werden. So war es Aufgabe der vorliegenden Erfindung, vorverlängerte Epoxidharze bereitzustellen, welche sich durch niedrige Viskosität, hohe Temperaturbeständigkeit und hoher Linearität auszeichnen und deren Herstellung in Gegenwart relativ geringer Mengen eines Vorverlängerungskatalysators gelingt.

Die vorliegende Erfindung betrifft Epoxidharzzusammensetzungen, enthaltend ein bei Raumtemperatur flüssiges Epoxidharz mit durchschnittlich mehr als einer Epoxidgruppe pro Molekül, eine Verbindung mit zwei phenolischen Hydroxylgruppen und ein quaternares Piperidiniumsalz.

Als Epoxidverbindungen kommen vor allem solche in Frage, deren Molekulargewicht relativ niedrig ist, z.B. kleiner als 3 500, insbesondere kleiner als 2 000, bevorzugt zwischen 175 und 350. Bei den vorzugsweise verwendeten Diglycidylverbindungen kann es sich um Ether oder Ester handeln; ferner können die Glycidylgruppen auch an Stickstoffatome geknüpft sein. Als Phenole, welche den Ethern zugrunde liegen, sind beispielsweise die folgenden zu nennen: einkernige Diphenole (wie Resorcin), Naphthaline mit zwei Hydroxylgruppen, wie 1,4-Dihydroxy-naphthalin, Biphenyle und andere zweikernige aromatische Verbindungen, die eine Methylen-, Isopropyliden-, O-, $SO_2$-, oder S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A. Im weiteren kommen aliphatische Dihydroxyverbindungen in Betracht, z.B. 1,4-Butandiol oder Polyetherglykol. Als Basis für die Glycidylester dienen beispielsweise die Phthalsäure, Terephthalsäure, Tetrahydrophthalsäure, Hexahydrophthalsäure, Adipinsäure, Trimethyladipinsäure oder Sebazinsäure. Ferner kommen einkernige Hydantoine mit Glycidylgruppen an den Stickstoffatomen, wie N,N′-Diglycidyl-hydantoine, in Frage. Andere Glycidylverbindungen von Stickstoff enthaltenden Ringen sind solche von 5,6-Dihydrourazilen oder Barbitursäuren.

Dabei handelt es sich um bekannte und mehrheitlich käufliche Produkte.

Erfindungsgemäss werden z.B. Piperidiniumsalze eingesetzt, welche der Formel I entsprechen

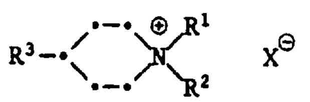

(I),

worin $R^1$ $C_1$-$C_8$-Alkyl und $R^2$ $C_1$-$C_8$-Alkyl, $C_1$-$C_8$-Hydroxyalkyl, $C_1$-$C_8$-Alkoxyalkyl, $C_1$-$C_8$-Alkoxy-hydroxyalkyl, $C_1$-$C_8$-Alkenyl, $C_1$-$C_8$-Alkoxycarbonylalkyl, $C_1$-$C_8$-Alkylcarbonylalkyl, $C_7$-$C_9$-Phenylalkyl oder $C_7$-$C_9$-Phenylhydroxyalkyl bedeutet, $R^3$ Wasserstoff oder Hydroxy ist, und X Halogen oder Acetat ist.

Als Piperidiumsalze eignen sich vorzugsweise solche, die der Formel (Ib) entsprechen

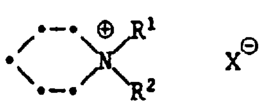

(Ib),

worin $R^1$ $C_1$-$C_8$-Alkyl und $R^2$ $C_1$-$C_8$-Alkyl, $C_1$-$C_8$-Hydroxyalkyl oder Benzyl bedeutet und X Halogen oder Acetat ist.

Als $C_1$-$C_8$-Alkyl-Reste, bevorzugt $C_1$-$C_4$-Alkyl-Reste kommen Methyl, Ethyl, n-Propyl, n-Butyl, n-Hexyl oder n-Octyl in Frage. Diese Reste können insbesondere in 2-Stellung (falls vorhanden) eine Hydroxygruppen tragen. Insbesondere bedeutet $R^1$ Methyl oder Ethyl und $R^2$ Ethyl.

Mit $C_1$-$C_8$-Alkoxy-hydroxyalkyl werden Reste bezeichnet, die sowohl eine Etherfunktion, als auch eine Hydroxygruppe enthalten, z.B. (2-Hydroxy-3-butoxy)-propyl.

Bedeutet $R^2$ Alkenyl, so kann es beispielsweise Allyl oder Methallyl sein.

Weitere Beispiele für $R^2$ sind Acetonyl, Acetoxyethyl oder (2-Hydroxy-2-phenyl)-ethyl.

X als Halogen ist insbesondere I, Br oder Cl und vor allem I.

Die Verbindungen der Formel I sind bekannt und können auf bekannte Weise hergestellt werden, z.B. durch Umsetzung eines Piperidins der Formel II

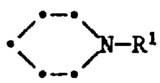

(II)

mit einer Verbindung der Formel III $R^2$-X. In diesem Zusammenhang wird auf die Beispiele verwiesen.

Das erfindungsgemäss zu verwendende Piperidiniumsalz wird in katalytisch wirksamen Mengen eingesetzt, z.B. in einer Menge von etwa 2 bis 2000, vorzugsweise 10-700 und insbesondere 30-500 ppm, bezogen auf das Gewicht des Basisharzes.

Das Vorverlängerungsverfahren wird bekanntermassen durchgeführt durch Umsetzung des Epoxidharzes mit Verbindungen, welche zwei phenolische Hydroxylgruppen enthalten.

Dabei können alle in der Methodik der Vorverlängerung bekannten aromatischen Verbindungen mit zwei phenolischen Hydroxylgruppen verwendet werden. Beispielsweise seien genannt: einkernige Diphenole (wie Resorcin), Naphthaline mit zwei Hydroxylgruppen, wie 1,4-Dihydroxynaphthalin, Biphenyle und andere zweikernige aromatische Verbindungen, die eine Methylen-, Isopropyliden-, O-, $SO_2$-, oder S-Brücke aufweisen und zwei Hydroxylgruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A.

Die Menge des Phenols hängt davon ab, was für ein Produkt gewünscht wird. Je grösser sie ist, desto höher wird das Molekulargewicht des Endproduktes im allgemeinen sein. Dabei wird auch der Schmelzpunkt ansteigen und werden sich die physikalischen und chemischen Eigenschaften des gewonnenen Harzes ändern.

Die Vorverlängerungsverfahren und ihre Durchführung sind bekannt und beispielsweise in den US 3,275,708 und 4,465,722 beschrieben.

Dabei erfolgt die Umsetzung beispielsweise bei einer Temperatur von 100-220°C, bevorzugt 120-190°C und einem Druck von 10-1000 mbar, bevorzugt 200-800 mbar.

Die auf diese Weise erhaltenen vorverlängerten Epoxidharze zeichnen sich durch hohe Stabilität der Epoxidzahl und der Viskosität nach thermischer Belastung aus. Ausserdem besitzen diese Harze eine für die Weiterverarbeitung günstige, niedrige Viskosität. Es hat sich gezeigt, dass die erfindungsgemäss einzusetzenden Vorverlängerungskatalysatoren eine konstante Aktivität in der Reaktion besitzen und durch ihre hohe Selektivität zu ausserordentlich linearen Produkten führen. Auf den Einsatz eines Kettenabbrechers kann ausserdem verzichtet werden. Falls erwünscht ist auch die Verwendung eines monofunktionellen Kettenabbrechers, z.B. eines Phenols für die optimale Durchführung der Vorverlängerung geeignet. Die Katalysatoren sind in relativ kleinen Mengen wirksam, die Reaktion verläuft rasch und es ist eine nur geringe Neigung zu unerwünschter Phenolspaltung festzustellen. Dies zeigt sich in einem guten Farbverhalten der Produkte.

Die gehärteten Endprodukte (hergestellt durch Vernetzen mit üblichen Härtungsmitteln für Epoxidharze, wie Säureanhydride, Polyamine, mehrwertige Phenole usw.) weisen gute Flexibilität auf.

Die Produkte können für den Oberflächenschutz, zur Herstellung von Giesslingen, insbesondere auf dem Elektrogebiet, von Prepregs und Laminaten verwendet werden.

Besonders erwähnenswert ist ihr Einsatz zur Herstellung von Festharzen als Bindemittel von Pulverlacken, von wasserlöslichen Primern (z.B. für Autokarosserien), für Dosen- und Tubenlacke.

Beispiel 1: N-Methyl-N-benzyl-piperidiniumchlorid

In einem Sulfierkolben von 1000 ml Inhalt werden folgende Substanzen in derselben Reihenfolge vermischt:

- 99,2 g N-Methylpiperidin (1,0 mol),
- 200 ml Methyl-ethylketon (MEK),
- 126,6 g Benzylchlorid (1,0 mol).

Es wird unter Rühren bis zur Rückflusstemperatur erwärmt (ca. 83°C), wobei das Reaktionsgemisch nach einiger Zeit trüb wird. Nach sieben Stunden Reaktionszeit wird der Kristallbrei abgenutscht, mit MEK nachgewaschen und im

Vakuum getrocknet. Das Filtrat wird nochmals sieben Stunden zur Reaktion gebracht; das Nutschgut gleich behandelt. Ausbeute 199 g ≙ 88 %. Schmelzpunkt 248°C.

Beispiel 2: N-Methyl-N-butyl-piperidiniumbromid

In einer Schliffbirne von 1000 ml Inhalt werden in analoger Weise folgende Substanzen vermischt und zur Reaktion gebracht:

- 24,8 ml N-Methylpiperidin (0,2 mol),
- 50,0 ml MEK,
- 21,8 ml 1-Butylbromid (0,2 mol).

Die Schliffbirne wird in einem Rotationsverdampfer für sechs Stunden auf ca. 65°C erwärmt und dann das ausgefällte Produkt abgenutscht, wobei das Filtrat nochmals zwei Stunden bei 65°C gerührt wird und ebenso abgenutscht wird. Nach dem Waschen mit wenig MEK und Trocknen beträgt die Ausbeute 31,7 g ≙ 67 %. Schmelzpunkt 241°C.

Beispiel 3: N-Methyl-N-ethyl-piperidiniumiodid

In einer Schliffbirne werden analog zu Beispiel 2 vermischt:

- 40,7 ml Ethyliodid (0,5 mol),
- 180 ml Methylethylketon,
- 62,0 ml N-Methylpiperidin (0,5 mol).

Nach einer Reaktionszeit von ca. 4 Stunden bei 65°C wird abgenutscht, kurz gewaschen und getrocknet; die Ausbeute ist 119 g ≙ 93 %. Schmelzpunkt 304°C.

Beispiel 4: N,N-Dimethyl-piperidiniumchlorid

In einem Glasautoklaven von ca. 850 ml Inhalt werden die folgenden Komponenten unter Druck bis 4 bar ausreagiert:

- Methylpiperidin 70,0 g ≙ 0,7 mol
- Methylethylketon 300 ml
- Methylchlorid 38,5 g ≙ 0,7 mol (mit Ueberschuss)

Nach ca. 4 Stunden max. 90°C ist die Reaktion beendet; nach dem Nutschen, Waschen mit MEK und Trocknen beträgt die Ausbeute 98 g ≙ 90 %. Schmelzpunkt 315°C (Zersetzung).

Beispiel 5: N,N-Diethyl-piperidiniumiodid

In einer Schliffbirne werden analog zu Beispiel 2 vermischt:

- 16,2 ml Ethyliodid (0,2 mol),
- 50 ml Methylisobutylketon,
- 28,2 ml N-Ethylpiperidin (0,2 mol).

Nach einer Reaktionszeit von ca. 4 Stunden bei 60°C (Rotavapor), in deren Verlauf weitere 70 ml MIBK zur Verdünnung beigefügt werden, wird das Reaktionsgemisch abgenutscht, gewaschen und sofort in den Vakuumtrockenschrank verbracht; die Ausbeute ist 46,9 g ≙ 87 %. Schmelzpunkt 271°C.

Beispiel 6: N-Methyl-N-ethylpiperidiniumacetat

Herstellung eines Quats in Acetatform aus dem entsprechenden Iodid via Halogenidfällung: es werden separat folgende beiden Substanzen in je 300 ml destilliertem Wasser gelöst:

- Bleiacetat-trihydrat: 38,1 g ≙ 0,1 mol,
- Ethyl-methylpiperidiniumiodid: 51,2 g ≙ 0,2 mol.

Diese Fällung erfolgt bei Zimmertemperatur.

Das gefällte Bleiiodid lässt sich in einem groben Faltenfilter leicht abfiltern, wobei Spuren von Bleiionen im Filtrat durch zusätzliche Nachfällung mit einer verdünnten Ammoniumhydrogencarbonatlösung entfernt werden. Nach dem Klarfiltern wird die gewonnene Lösung des Quat-acetats auf dem Rotationsverdampfer in einer vorgehend tarierten Schliffbirne eingedampft. Das so erhaltene Produkt, ein halbflüssiger Kristallbrei, schmilzt bei 30-34°C. Die Ausbeute beträgt 35,1 ≙ 95 %.

<u>Beispiel 7:</u> <u>N-Ethyl-N-butyl-piperidiniumiodid</u>

In einer Schliffbirne wird entsprechend zum Beispiel 2 folgendes vermischt und auf dem Rotationsverdampfer während vier Stunden bei 50°C zur Reaktion gebracht:

- 23,2 ml Butyliodid (0,2 mol),
- 50 ml Methylethylketon (+50 ml),
- 28,0 ml N-Ethylpiperidin (0,2 ml).

Das entstehende Reaktionsprodukt bildet einen dicken Kristallbrei, der im Laufe der Reaktion selbst noch mit weiteren 50 ml Methylethylketon verdünnt werden muss, damit er durch die Drehbewegung homogen gerührt wird und auch nachher abgenutscht werden kann. Nach dem Waschen des Filterkuchens auf der Nutsche wird mit wenig MEK nachgewaschen, fertig gefiltert und im Vakuumwärmeschrank getrocknet. Ausbeute 42,4 g ≙ 71 %. Schmelzpunkt 226°C.

<u>Beispiel 8:</u> <u>N-Methyl-N-hydroxyethyl-piperidiniumacetat</u>

In einem kleinen Autoklaven von ca. 900 ml Inhalt werden die folgenden Komponenten unter Druck bis 2,0 bar absolut und im Temperaturbereich 20-29°C zur Reaktion gebracht:

- N-Methylpiperidin 50 g (0,5 mol)
- Eisessig 30 g (0,5 mol)
- Methylethylketon 150 ml
- Ethylenoxid 22 g (0,5 mol)

Nach 5 Stunden Reaktionszeit wird das Reaktionsgemisch, welches aus zwei flüssigen Phasen besteht, so lange auf dem Rotationsverdampfer eingeengt, bis keine flüchtigen Anteile mehr abdestillieren, sodann nochmals mit 70 ml Butanol aufgenommen und vollständig im Vakuum eingeengt. Das nichtflüchtige und nicht kristallisierbare Produkt wird als 50%ige Butanollösung für die Kettenverlängerungsversuch konfektioniert. Die Ausbeute beträgt 94,1 g ≙ 92 %. $n_{25}^{D}$ = 1,479.

<u>Beispiel 9:</u> <u>N-Methyl-N-2-hydroxypropyl-piperidiniumacetat</u>

In einem Kolben mit Wasserbad und Rückflusskühler werden analog zu Beispiel 8 die folgenden Komponenten unter Rückfluss bei Normaldruck während zehn Stunden zur Reaktion gebracht:

- 24,8 ml N-Methylpiperidin (0,2 mol)
- 11,4 ml Essigsäure 100 % (0,2 mol)
- 30 ml Methylethylketon
- 21,2 ml Propylenoxid (0,3 mol)

Die Aufarbeitung erfolgt auf gleiche Weise wie im vorhergehenden Beispiel. Auch dieses Reaktionsprodukt wird als 50%ige Butanollösung zubereitet und kann gegebenenfalls weiter verdünnt werden. Die Ausbeute beträgt 40,3 g ≙ 93 %. $n_{25}^{D}$ = 1,480.

<u>Beispiel 10:</u> <u>N-Methyl-N-2-hydroxybutyl-piperidiniumacetat</u>

In einem Kolben mit Wasserbad und Rückflusskühler werden analog zu Beispiel 8 die folgenden Komponenten unter Rückfluss bei Normaldruck während neun Stunden zur Reaktion gebracht:

- 24,8 ml N-Methylpiperidin (0,2 mol)

- 11,4 ml Essigsäure 100 % (0,2 mol)
- 20 ml Methylethylketon
- 17,7 ml Butylenoxid-1 (0,2 mol)

Die Aufarbeitung erfolgt auf gleiche Weise wie im Beispiel 8 mit dem Quaternisierungsprodukt mit Ethylenoxid; auch hier wird das Reaktionsprodukt via Destillation/Strippen gereinigt und als 50%ige Lösung in Butanol konfektioniert. Die Ausbeute beträgt in diesem Fall 36,1 g ≙ 78 %. $n_{25}^{D}$ = 1,476.

Beispiel 11: N-Methallyl-N-methylpiperidinium-chlorid

In einer Schliffbirne werden analog zu Beispiel 7 folgende Agentien vermischt und auf dem Wasserbad während 7 Stunden bei 55°C zur Reaktion gebracht:

- 18,1 g Methallylchlorid (0,2 mol)
- 80 g Methylethylketon
- 19,8 g N-Methylpiperidin (0,2 mol)

Nach dem Abnutschen des entstandenen Kristallbreis wird mit wenig Keton nachgewaschen und im Vakuum getrocknet. Die Ausbeute beträgt 19,9 g ≙ 53 %, der Schmelzpunkt ist 209°C.

Beispiel 12: N-Acetonyl-N-methylpiperidinium-chlorid

Analog zur Beispiel 7 werden die folgenden Agentien während 9 Stunden bei 60°C zur Reaktion gebracht:

- 18,5 g Chloraceton (0,2 mol)
- 80 g Methylethylketon
- 19,8 g N-Methylpiperidin (0,2 mol)

Nach dem Abnutschen des Kristallbreis wird mit Methylethylketon nachgewaschen und im Vakuum getrocknet. Die Ausbeute beträgt 26,0 g ≙ 68 %, der Schmelzpunkt ist 130°C.

Beispiel 13: N-(Hydroxy-3-butoxy)propyl-N-methylpiperidiniumacetat

Gemäss Beispiel 9 werden in einer Schliffbirne die folgenden Agentien vermischt und während 13 Stunden bei 60°C zur Reaktion gebracht:

- 19,8 g N-Methylpiperidin (0,2 mol)
- 20 g Methylisobutylketon (MIBK)
- 12,0 g Essigsäure (0,2 mol)
- 26,0 g Butyglycidether (0,2 mol)

Die Aufarbeitung erfolgt wie im Beispiel 9 durch Vakuumdestillation und durch Verdünnen mit Butanol zu einer 50%igen Lösung. Ausbeute 51,2 g ≙ 89 %, der Brechungsindex $n_{25}^{D}$ = 1,473.

Beispiel 14: N-Acetoxyethyl-N-methylpiperidinium-bromid

Analog Beispiel 7 werden in einer Schliffbirne die folgenden Substanzen während 6 Stunden bei 60°C reagieren gelassen:

- 33,5 g Ethyl-bromazetat (0,2 mol)
- 80 g Methylethylketon
- 19,8 g N-Methylpiperidin (0,2 mol)

Der entstandene Kristallbrei wird abgenutscht, gewaschen und im Vakuumschrank getrocknet. Ausbeute 47,2 g ≙ 89 %, der Schmelzpunkt ist 202°C.

Beispiel 15: N-Ethyl-N-methyl-4-hydroxypiperidinium-iodid

Wie im vorgehenden Beispiel werden in einer Schliffbirne auf einem Wasserbad folgende Agentien während 6 Stunden bei 60°C reagieren gelassen:

- 23,0 g 1-Methyl-4-hydroxypiperidin (0,2 mol)
- 120 g Methylisobutylketon (MIBK)
- 31,2 g Ethyliodid (0,2 mol)

Der entstandene voluminöse Kristallbrei wird genutscht, gewaschen und im Vakuum getrocknet: Ausbeute 44,4 g ≙ 97 % mit Schmelzpunkt 266°C.

Beispiel 16: N-(2-Hydroxy-2-phenyl)ethyl-N-methylpiperidiniumacetat

Analog zu den Beispielen 9 und 13 bringt man folgende Substanzen während 14 Stunden bei 70°C auf dem Wasserbad zur Reaktion:

- 19,8 g N-Methylpiperidin (0,2 mol)
- 30 g Methylisobutylketon (MIBK)
- 12,0 g Essigsäure (0,2 mol)
- 24,0 g Styroloxid (0,2 mol)

Nach dem Einengen des Reaktionsgemisches mit Vakuumdestillation und gleichzeitigen Strippen im Luftstrom erfolgt die Auswage. Die Ausbeute beträgt 51,0 g ≙ 91 % mit einem Brechungsindex von $n_{25}^{D}$ = 1,521. Es wird von diesem Produkt eine 50%ige Lösung in Butanol hergestellt.

Durchführung von Advancement - Reaktionen mit BIS-A-diepoxy/BIS-A:

Beispiel 17: Im Polymerkolben werden 845 g Basisharz (Bisphenol A - diglycidylether) mit einer Epoxyzahl von 5,4 eq/kg unter Rühren aufgeheizt und bei 100°C mit einer ersten Portion Bisphenol A vermischt (217 g). Sodann wird als Katalysator Ethyl-methylpiperidinium-iodid (Bsp. 3) in einer Butanollösung zugegeben, wobei die Konzentration, bezogen auf das Basisharz, 300 ppm ≙ 1,2 mmol/kg beträgt. Gleichzeitig wird die Temperatur unter stetigem Rühren angehoben; bei 170°C wird die zweite Portion Bisphenol A von 217 g zugegeben, wonach die Temperatur bei 180°C konstant gehalten wird. Nach ca. 3-4 Stunden hat die Epoxyzahl des Reaktionsgemisches den Wert von 0,60 eq/kg erreicht, was durch die Titration kontrolliert wird, sodass dann die Harzschmelze ausgetragen, abgekühlt und zerkleinert werden kann. Die Viskositäten dieses Harzes (gemessen in Butylcarbitol bei einem Festgehalt von 40 % bei 25°C im Hoeppler-Viskosimeter) betragen für den Blankwert 2200 mPas gegenüber 2950 mPas nach einer thermischen Stabilitätsprobe des reinen Harzes von 4h/180°C.

Beispiel 18: Analoges Vorgehen wie im Beispiel 17, wobei als Katalysator Methyl-butylpiperidinium-bromid (Bsp. 2) in Butanollösung eingesetzt wird und wobei die Katalysatorkonzentration, bezogen auf das Basisharz 150 ppm ≙ 0,64 mmol/kg beträgt. Die Viskositäten dieses Harzes sind unter den gleichen Bedingungen 2200 mPas und 3520 mPas.

Beispiel 19: Analoges Vorgehen wie im Beispiel 17, wobei als Katalysator N,N-Dimethylpiperidinium-chlorid (Bsp. 4) in Butanollösung so eingesetzt wird, dass seine Konzentration, bezogen auf das Basisharz, 150 ppm ≙ 1,0 mmol/kg beträgt. Die Viskositäten dieses Harzes sind unter den gleichen Bedingungen 2650 mPas und 3630 mPas.

Beispiel 20: Im Polymerkolben werden 845 g Basisharz (Bisphenol-A-di-glycidylether) mit einer Epoxyzahl von 5,4 eq/kg unter Rühren bei 40-60°C mit einer Methanollösung des Katalysators Methyl-benzylpiperidiniumchlorid (Bsp. 1) vermischt, sodass die Katalysatorkonzentration inbezug auf das Basisharz 400 ppm ≙ 1,8 mmol/kg beträgt. Gleichzeitig wird die Temperatur unter Rühren auf 100°C gesteigert und die erste Portion von 217 g Bisphenol A zum katalysatorhaltigen Basisharz zugegeben und durch Rühren aufgelöst. Man erwärmt das Gemisch weiter auf 170°C und gibt die zweite Portion von 217 g Bisphenol A hinzu; beim Erreichen von 180°C wird die Temperatur bei einem partiellen Vakuum vom 500 mbar konstant gehalten, wobei nach 3-4 Stunden die zu erzielende Epoxyzahl erreicht ist - auch hier erfolgt die Kontrolle durch eine Epoxytitration - sodass die Harzschmelze ausgetragen, abgekühlt und zerkleinert werden kann. Die Viskositäten dieses Harzes (40 % in Butylcarbitol, 25°C) betragen für den Blankwert 2280 mPas gegenüber 3560 mPas nach einer thermischen Behandlung von 4h/180°C.

Beispiel 21: Analoges Vorgehen wie im Beispiel 17, mit Methyl-ethylpiperidiniumacetat (Bsp. 6) als Katalysator, wobei seine Konzentration inbezug auf das Basisharz 200 ppm ≙ 1,1 mmol/kg sein soll. Die entsprechenden Viskositäten betragen hier 2250 bzw. 3430 mPas.

<u>Beispiel 22:</u> Analoges Vorgehen wie im Beispiel 17, wobei als Katalysator Diethyl-piperidinium-iodid (Bsp. 5) in Butanollösung eingesetzt wird und wobei die Konzentration 300 ppm $\hat{=}$ 1,1 mmol/kg beträgt. Die Viskositäten dieses Harzes sind unter denselben Bedingungen 2060 und 2770 mPas.

<u>Beispiel 23:</u> Analoges Verfahren wie im Beispiel 22, mit Ethyl-butylpiperidinium-iodid (Bsp. 7) als Katalysator, bei einer Konzentration von 200 ppm $\hat{=}$ 0,67 mmol/kg. Die Viskositäten dieses Harzes sind unter den gleichen Bedingungen 2070 und 3160 mPas.

<u>Beispiel 24:</u> Analoges Vorgehen wie im Beispiel 17, wobei als Katalysator Methyl-2-hydroxyethyl-piperidinium-acetat (Bsp. 8) eingesetzt wird und wobei die Konzentration dieses Katalysators 400 ppm $\hat{=}$ 2,0 mmol/kg beträgt. - Die Viskositäten dieses Harzes sind unter den gleichen Bedingungen 2080 mPas und 3350 mPas.

<u>Beispiel 25:</u> Analoges Vorgehen wie im Beispiel 17 wobei als Katalysator Methyl-2-hydroxypropyl-piperidinium-acetat (Bsp. 9) eingesetzt wird und wobei die Konzentration desselben 450 ppm $\hat{=}$ 2,1 mmol/kg beträgt. - Die Viskositäten dieses Harzes sind unter den gleichen Bedingungen 2140 mPas und 3500 mPas.

<u>Beispiel 26:</u> Analoges Vorgehen wie im Beispiel 17, wobei als Katalysator Methyl-2-hydroxybutyl-piperidinium-acetat (Bsp. 10) eingesetzt wird und wobei seine Konzentration 400 ppm $\hat{=}$ 1,73 mmol/kg beträgt. - Die Viskositäten dieses Harzes sind unter den gleichen Bedingungen 2040 mPas und 3140 mPas.

<u>Beispiel 27:</u> Analoges Vorgehen wie im Beispiel 17, mit N-Methallyl-N-methylpiperidinium-chlorid (Bsp. 11) als Katalysator, bei einer Konzentration von 400 ppm $\hat{=}$ 2,1 mmol/kg. Die beiden charakterisierenden Viskositäten dieses Harzes sind unter gleichen Bedingungen 2210 mPas und 3160 mPas.

<u>Beispiel 28:</u> Analoges Vorgehen wie im Beispiel 17, mit N-Acetonyl-N-methylpiperidinium-chlorid (Bsp. 12) als Katalysator, bei einer Konzentration von 700 ppm $\hat{=}$ 3,6 mmol/kg. Die beiden Viskositäten des entstandenen Harzes sind unter gleichen Bedingungen 2210 mPas und 3100 mPas.

<u>Beispiel 29:</u> Analoges Vorgehen wie im Beispiel 17, mit N-(2-Hydroxy-3-butoxy)propyl-N-methylpiperidinium-acetat (Bsp. 13) als Katalysator in Butanollösung, bei einer Konzentration von 700 ppm $\hat{=}$ 2,4 mmol/kg. Die beiden charakterisierenden Viskositäten sind unter gleichen Bedingungen 2300 und 3840 mPas.

<u>Beispiel 30:</u> Analoges Vorgehen wie im Beispiel 20, mit N-Acetoxethyl-N-methylpiperidinium-bromid (Bsp. 14) in Methanollösung, bei einer Konzentration von 100 ppm $\hat{=}$ 3,8 mmol/kg Basisharz. Nach einer Reaktionszeit von ca. 3-3,5 Stunden wird die Reaktion unterbrochen. Die entsprechenden Viskositäten betragen 2020 und 3060 mPas.

<u>Beispiel 31:</u> Analoges Vorgehen wie im Beispiel 17, wobei N-Ethyl-N-methyl-4-hydroxypiperidinium-iodid (ex Bsp. 15) eingesetzt wird: Konzentration 500 ppm $\hat{=}$ 2,2 mmol/kg Basisharz. Die Viskositäten sind 1920 mPas und 2570 mPas.

<u>Beispiel 32:</u> Analoges Beispiel wie im Beispiel 17, mit N-(2-Hydroxy-2-phenyl)ethyl-N-methylpiperidinium-acetat -acetat ex Bsp. 16 als Katalysator, mit 750 ppm $\hat{=}$ 2,7 mmol/kg als Einsatzkonzentration, bezogen auf Basisharz. Die entsprechenden Viskositäten betragen 2320 mPas und 3420 mPas.

**Patentansprüche**

1. Epoxidharzzusammensetzung enthaltend ein bei Raumtemperatur flüssiges Epoxidharz mit durchschnittlich mehr als einer Epoxidgruppe pro Molekül, eine Verbindung mit zwei phenolischen Hydroxylgruppen und ein quaternäres Piperidiniumsalz als Vorverlängerungskatalysator.

2. Epoxidharzzusammensetzung gemäss Anspruch 1, enthaltend Diglycidylverbindungen mit einem Molekulargewicht unter 3500.

3. Epoxidharzzusammensetzung gemäss Anspruch 1, enthaltend ein Piperidiniumsalz der Formel I

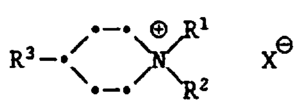

(I),

worin $R^1$ $C_1$-$C_8$-Alkyl und $R^2$ $C_1$-$C_8$-Alkyl, $C_1$-$C_8$-Hydroxyalkyl, $C_1$-$C_8$-Alkoxyalkyl, $C_1$-$C_8$-Alkoxy-hydroxyalkyl, $C_1$-$C_8$-Alkenyl, $C_1$-$C_8$-Alkoxycarbonylalkyl, $C_1$-$C_8$-Alkylcarbonylalkyl, $C_7$-$C_9$-Phenylaklyl oder $C_7$-$C_9$-Phenylhydroxyalkyl bedeutet, $R^3$ Wasserstoff oder Hydroxy ist, und X Halogen oder Acetat ist.

4. Epoxidharzzusammensetzung gemäss Anspruch 1, enthaltend ein Piperidiniumsalz der Formel Ib

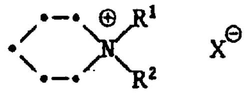 (Ib),

worin $R^1$ $C_1$-$C_8$-Alkyl und $R^2$ $C_1$-$C_8$-Alkyl, $C_1$-$C_8$-Hydroxyalkyl oder Benzyl bedeutet und X Halogen oder Acetat ist.

5. Epoxidharzzusammensetzungen gemäss Anspruch 3, enthaltend ein Piperidiniumsalz der Formel I, worin $R^1$ Methyl oder Ethyl und $R^2$ Ethyl sind.

6. Epoxidharzzusamaensetzungen gemäss Anspruch 3, enthaltend ein Piperidiniumsalz der Formel I, worin X Iod ist.

7. Verwendung von quaternären Piperidiniumsalzen als Vorverlängerungskatalysatoren für Epoxidharze.

8. Verwendung gemäss Anspruch 7 von Piperidiniumsalzen der Formel I gemäss Anspruch 3.

## Claims

1. An epoxy resin composition comprising an epoxy resin that is liquid at room temperature and has on average more than one epoxy group per molecule, a compound with two phenolic hydroxyl groups, and a quaternary piperidinium salt as advancement catalyst.

2. An epoxy resin composition according to claim 1, comprising diglycidyl compounds having a molecular weight below 3500.

3. An epoxy resin composition according to claim 1, comprising a piperidinium salt of formula I

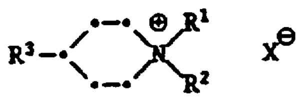 (I),

wherein $R^1$ is $C_1$-$C_8$alkyl and $R^2$ is $C_1$-$C_8$alkyl, $C_1$-$C_8$hydroxyalkyl, $C_1$-$C_8$alkoxyalkyl, $C_1$-$C_8$alkoxyhydroxyarkyl, $C_1$-$C_8$alkenyl, $C_1$-$C_8$alkoxycarbonylalkyl, $C_1$-$C_8$alkylcarbonylalkyl, $C_7$-$C_9$phenylalkyl or $C_7$-$C_9$phenylhydroxyalkyl, $R^3$ is hydrogen or hydroxy, and X is halogen or acetate.

4. An epoxy resin composition according to claim 1, comprising a piperidinium salt of formula Ib

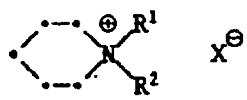 (Ib),

wherein $R^1$ is $C_1$-$C_8$alkyl and $R^2$ is $C_1$-$C_8$alkyl, $C_1$-$C_8$hydroxyalkyl or benzyl, and X is halogen or acetate.

5. An epoxy resin composition according to claim 3, comprising a piperidinium salt of formula I wherein $R^1$ is methyl or ethyl and $R^2$ is ethyl.

6. An epoxy resin composition according to claim 3, comprising a piperidinium salt of formula I wherein X is iodine.

7. Use of a quaternary piperidinium salt as advancement catalyst for epoxy resins.

8. Use according to claim 7 of a piperidinium salt of formula I according to claim 3.

## Revendications

1. Composition de résine époxyde contenant une résine époxyde liquide à la température ambiante, avec en moyenne plus d'un groupe époxy par molécule, un composé ayant deux groupes hydroxyle phénoliques et un sel de pipéridinium quaternaire, comme catalyseur de pré-extension.

**2.** Composition de résine époxyde selon la revendication 1, contenant des composés diglycidyliques ayant une masse moléculaire inférieure à 3500.

**3.** Composition de résine époxyde selon la revendication 1, qui contient un sel de pipéridinium de formule (I)

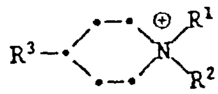 $X^{\ominus}$ (I),

dans laquelle $R^1$ est un groupe alkyle en $C_1$-$C_8$, et $R^2$ est un groupe alkyle en $C_1$-$C_8$, hydroxyalkyle en $C_1$-$C_8$, alcoxyalkyle en $C_1$-$C_8$, alcoxyhydroxyalkyle en $C_1$-$C_8$, alcényle en $C_1$-$C_8$, alcoxycarbonylalkyle en $C_1$-$C_8$, alkylcarbonylalkyle en $C_1$-$C_8$, phénylalkyle en $C_7$-$C_9$ ou phénylhydroxyalkyle en $C_7$-$C_9$, $R^3$ est un hydrogène ou un groupe hydroxy, et X est un halogène ou acétate.

**4.** Composition de résine époxyde selon la revendication 1, qui contient un sel de pipéridinium de formule (Ib)

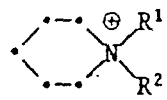 $X^{\ominus}$ (Ib),

dans laquelle $R^1$ est un groupe alkyle en $C_1$-$C_8$ et $R^2$ est un groupe alkyle en $C_1$-$C_8$, hydroxyalkyle en $C_1$-$C_8$ ou benzyle, et X est un halogène ou acétate.

**5.** Compositions de résines époxydes selon la revendication 3, contenant un sel de pipéridinium de formule (I) dans laquelle $R^1$ est le groupe méthyle ou éthyle et $R^2$ est le groupe éthyle.

**6.** Compositions de résines époxydes selon la revendication 3, contenant un sel de pipéridinium de formule (I) dans laquelle X est l'iode.

**7.** Utilisation de sels de pipéridinium quaternaire comme catalyseurs de pré-extension pour résines époxydes.

**8.** Utilisation selon la revendication 7 de sels de pipéridinium de formule (I) selon la revendication 3.